Europäisches Patentamt

European Patent Office

Office européen des brevets

(19)

‖‖‖‖‖‖‖‖‖‖‖‖‖‖‖‖‖‖‖‖‖‖

(11) Numéro de publication : **0 320 393 B1**

(12)

# FASCICULE DE BREVET EUROPEEN

(45) Date de publication du fascicule du brevet :
**25.03.92 Bulletin 92/13**

(51) Int. Cl.⁵ : **B09B 1/00**

(21) Numéro de dépôt : **88403126.1**

(22) Date de dépôt : **09.12.88**

---

(54) **Procédé de confinement souterrain de déchets dans une cavitée creusée par lessivage dans le sel.**

---

(30) Priorité : **11.12.87 FR 8717347**

(43) Date de publication de la demande :
**14.06.89 Bulletin 89/24**

(45) Mention de la délivrance du brevet :
**25.03.92 Bulletin 92/13**

(84) Etats contractants désignés :
**DE ES FR GB IT NL**

(56) Documents cités :
**EP-A- 0 230 913**
**EP-A- 0 291 946**
**DE-A- 1 924 942**
**DE-A- 3 141 884**
**US-A- 2 942 424**
**TECHNISCHE RUNDSCHAU, vol. 79, nos. 30-31, 24 juillet 1987, pages 30-31, Bern, CH; "Umweltfreundliche Sonderabfallentsorgung"**

(73) Titulaire : **Société Française de Stockage Géologique "GEOSTOCK"**
**7, rue E. et A. Peugeot**
**F-92563 Rueil Malmaison Cédex (FR)**
Titulaire : **ESYS**
**73, Boulevard Haussmann**
**F-75008 Paris (FR)**

(72) Inventeur : **Boulanger, Alain**
**18, rue Pasteur**
**F-92300 Levallois-Perret (FR)**

(74) Mandataire : **Pinguet, André**
**Cabinet de Proprieté Industrielle CAPRI 28 bis, avenue Mozart**
**F-75016 Paris (FR)**

EP 0 320 393 B1

## Description

La présente invention a trait à un procédé de confinement de déchets, notamment des déchets industriels toxiques se présentant sous les formes solide, pâteuse ou liquide, dans une cavité souterraine lessivée dans le sel.

La technique du lessivage permet de creuser à moindres frais des cavités particulièrement vastes au sein de massifs de sel gemme. Typiquement, ces cavités présentent une hauteur de plusieurs centaines de mètres pour un diamètre de plusieurs dizaines de mètres. A titre d'exemple, un groupe de cavités existantes se trouve entre - 900 m à - 1.500 m sous la surface du sol et a un diamètre variable de 50 à 80 m. Il en résulte d'importants volumes disponibles pour un éventuel stockage.

Depuis quelques années, on songe à les utiliser pour se débarrasser de déchets industriels toxiques. Par nature, les massifs de sel gemme sont dépourvus d'écoulements significatifs d'eau souterraine. Pour s'en convaincre, il suffit de songer à la grande solubilité du sel qui aurait tôt fait de conduire à la disparition de tout gisement en présence d'eau douce. Aussi des déchets placés dans ces cavités resteront-ils confinés à l'abri de tout agent de dispersion et ne menaceront pas de polluer des nappes aquifères.

Toutefois, à l'issue de leur lessivage, les cavités sont remplies de saumure. Or, il n'est pas avantageux de les vidanger complètement (par exemple par injection d'air ou d'un gaz). La roche salifère a en effet la propriété de fluer lorsqu'elle est soumise à des efforts tels le poids des terres. Si une cavité, pleine d'air par exemple, restait ouverte, on ne tarderait pas à la voir se refermer plus ou moins brusquement avec tous les désordres que cela pourrait entraîner au niveau de la couverture du massif de sel, en général beaucoup plus rigide. Quant à l'idée de maintenir sous pression le gaz injecté dans la cavité, elle doit également être rejetée pour des raisons de coûts cette fois. Il faudrait en effet des compresseurs de très grande puissance pour atteindre la centaine de bars nécessaires et des quantités gigantesques de gaz, chaque cavité ayant un volume de plusieurs centaines de mètres cubes.

Aussi s'oriente-t-on plutôt vers un remplacement progressif de la saumure initialement présente par les déchets à stocker, chaque quantité de déchets introduite dans la cavité correspondant à une quantité équivalente de saumure refoulée en surface. Cela implique la possibilité de mettre en place les déchets depuis la surface, autrement dit leur conditionnement au sein d'une préparation suffisamment liquide pour être pompable et circuler au sein de tubes plongeurs.

Mais, comme le souligne la demande de brevet allemand DE-A-3 141 884 déposée par WINTERSHALL en 1981, il n'est pas question de laisser à long terme une substance liquide au sein d'une cavité en sel gemme hermétiquement close. Là encore, le fluage des roches salifères jouerait pour faire augmenter petit à petit la pression dans le liquide piégé. Il tendrait alors à transmettre au sommet de la cavité une pression correspondant au poids des terres régnant au fond de la cavité. Cette dernière serait la plupart du temps intolérable pour la bonne tenue mécanique de la calotte et des sabots des puits.

Aussi WINTERSHALL propose un procédé de confinement géologique de déchets industriels toxiques consistant à utiliser une cavité préalablement lessivée dans un massif de sel gemme et initialement remplie de saumure, et à introduire dans ladite cavité lesdits déchets au sein d'un mélange pompable de densité supérieure à celle de ladite saumure, et capable de faire prise une fois mis en place, ladite saumure étant évacuée en surface au fur et à mesure que de la matière est introduite dans ladite cavité. Or les préparations correspondant à ce type de mélange pompable et capable de faire prise sont, déjà sous forme liquide, très denses. Aussi s'accumulent-elles au fond des cavités lessivées tandis que la saumure plus légère reste au-dessus, créant de la sorte une interface horizontale saumure-déchets.

Si cette solution permet l'injection des déchets au sein de la cavité, puis leur stockage convenable, elle ne résout pas un autre problème de pollution. En effet dès lors que la préparation contenant les déchets entre en contact avec la saumure, cette dernière risque d'être contaminée. Cela interdit alors sa commercialisation (en vue par exemple d'en extraire le sel) et de surcroît crée un déchet secondaire dont il faut également se débarrasser. Pour éviter tout contact entre de la saumure et une autre substance de densité distincte, il est connu d'avoir recours à un liquide tampon dont la nature chimique et la densité sont choisies en vue d'un rôle efficace de barrière. Par exemple, le brevet américain US-A-2 942 424 déposé par R.A. KOBLE en 1957 indique comment choisir un tel liquide tampon pour protéger de l'éthylène vis-à-vis de saumure stockée dans la même cavité souterraine.

C'est ainsi que la présente invention a pour objet de trouver un liquide tampon pouvant jouer un rôle équivalent dans le cas présent. Un procédé pour l'utiliser en tant que barrière au cours même de l'introduction des déchets au sein de la cavité est également recherché.

A la vérité, la demande de brevet européen EP-A-O 291 946 déposée par NUKEM avec une priorité du 20 mai 1987 enseigne un procédé conforme à cet objectif. Reprenant celui proposé par WINTERSHALL et résumé ci-dessus, NUKEM prévoit en outre pour cela que :

- dans un premier temps, une quantité prédéterminée d'un liquide tampon non miscible à ladite saumure et audit mélange, présentant une densité comprise entre la densité de ladite saumure et celle dudit mélange et comportant un ou plusieurs solvants halogénés, est introduite au fond de ladite cavité grâce à un tube plongeur disposé dans un puits communiquant avec la surface ;

- dans un second temps, ledit mélange est introduit à l'aide dudit tube plongeur alors que l'extrémité inférieure dudit tube plongeur est maintenue dans ledit liquide tampon introduit tout d'abord.

Cependant la demande de NUKEM fait partie de l'état de la technique uniquement au sens de l'article 54(3) de la C.B.E. puisque le premier dépôt en Allemagne a donné lieu à une publication postérieure au 11 décembre 1987, date de priorité de la présente demande. Conformément à l'article 54(4), elle est donc opposable au titre de la nouveauté seulement dans les pays désignés en commun par NUKEM et par les présentes demanderesses, à savoir Allemagne, France et Grande-Bretagne. Par ailleurs, d'après l'article 56, son contenu n'a pas à être pris en compte pour l'appréciation de l'activité inventive du présent procédé. Or, la présente invention expose plus en détail comment les mélanges contenant des déchets sont introduits dans la cavité. Ces précisions qui se rapportent aux manoeuvres effectuées sur le tube plongeur, bien qu'habituelles pour l'homme de l'art spécialisé dans l'exploitation des sites de cavités lessivées en sel gemme, constituent une matière nouvelle par rapport à l'enseignement de la demande de NUKEM et sont en l'espèce brevetables dans les trois pays rappelés ci-dessus.

Pour ces derniers, la présente invention consiste donc à compléter le procédé enseigné par NUKEM et résumé ci-dessus en prévoyant enfin un tube plongeur constitué d'éléments tubulaires démontables. Quant aux autres pays désignés par les demanderesses, l'Italie, les Pays-Bas et l'Espagne, la présente invention ne saurait être distinguée, au moins sur le principe du procédé, de celle de NUKEM telle que résumée plus haut.

Avantageusement, ledit liquide tampon admet une densité entre 1,3 et 1,7.

Avantageusement, lesdits déchets subissent, avant leur introduction dans ladite cavité, un conditionnement consistant:

– si lesdits déchets se présentent sous forme liquide, à les incorporer à une matrice solide.

– ou/et, lorsque les éléments toxiques sont contenus dans des solides, à fractionner lesdits solides en granulés dont le diamètre typique est de l'ordre du centimètre.

Avantageusement, ledit mélange est obtenu en amalgamant auxdits déchets au moins un liant hydraulique à prise lente.

Avantageusement, ledit liant hydraulique contient de l'eau et de la chaux provenant toutes deux de résidus de l'industrie ainsi que des cendres volantes.

Avantageusement, lesdits éléments tubulaires démontables ont chacun une longeur totale ho, ladite quantité predéterminée dudit liquide tampon étant calculée pour que la hauteur h de liquide tampon dans la cavité soit à tout moment supérieure à ladite longueur ho des éléments du tube, et l'extrémité inférieure du tube étant. maintenue, pendant l'introduction du mélange au sein du liquide tampon grâce au démontage d'un élément après l'autre.

Avantageusement, une fois que la totalité de la cavité est remplie dudit mélange, tout le liquide tampon est retiré du puits et un liant hydraulique est finalement coulé dans ledit puits.

Avantageusement, ledit liant hydraulique final admet la même composition que le liant servant à la fabrication dudit mélange.

D'autres caractéristiques et avantages de la présente invention apparaîtront mieux à la lecture de la description suivante donnée à titre d'exemple non limitatif des formes possible: de réalisation de l'invention, en regard des dessins ci-joints, et qui fera bien comprendre comment l'invention peut être réalisée.

Sur les dessins :

– la figure 1 est une vue en coupe d'une cavité creusée par lessivage dans le sel ;

– les figures 2 à 4 sont des vues en coupe de la cavité de la figure 1 en cours de remplissage selon le procédé de l'invention ;

– la figure 5 est une vue en coupe de la cavité des figures 1 à 4 après remplissage selon le procédé de l'invention.

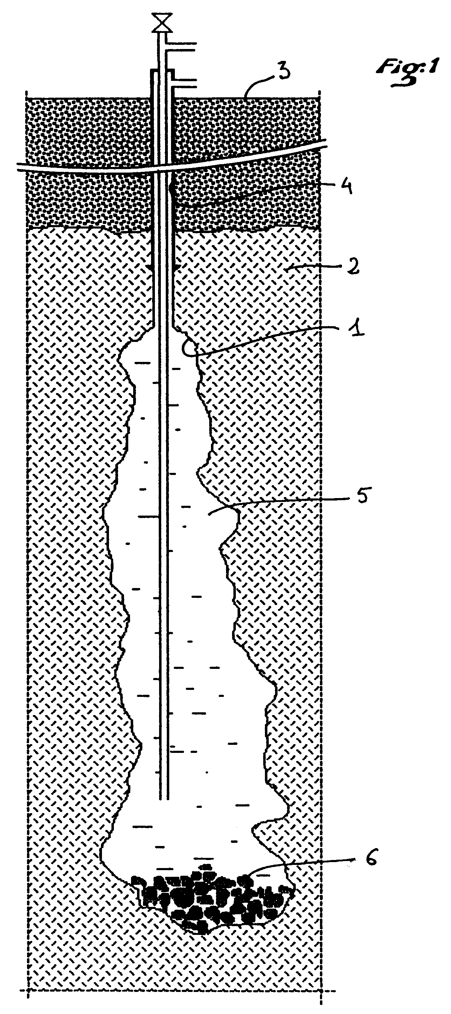

Sur la figure 1, une cavité souterraine 1 lessivée dans un massif de sel 2 communique avec la surface du terrain 3 au moyen d'un puits 4 foré et traité de façon conventionnelle. Au repos, cette cavité est remplie de saumure 5. Au fond de cette cavité se trouvent des éléments solides insolubles 6.

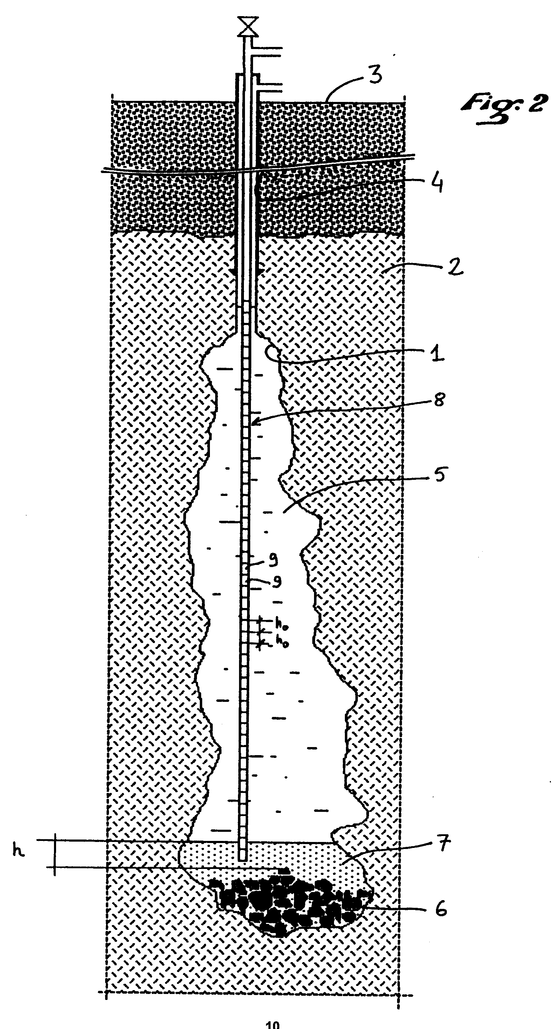

Sur la figure 2, on a introduit au fond de la cavité 1 et sur une hauteur libre h un liquide tampon 7 au moyen d'un tube 8. Ce tube est constitué d'éléments de tube identiques 9 ayant chacun une hauteur ho. Selon l'invention, on s'est arrangé pour avoir :

$$h > ho$$

Ledit liquide tampon 7 a une densité supérieure à celle de la saumure, et a donc déplacé la samure 5 vers le haut en commençant par occuper au moins partiellement les interstices entre les insolubles 6. La saumure a pu être récupérée en tête du puits foré 4.

La saumure a généralement une densité voisine de 1,2. Le liquide tampon, qui contient un solvant halogéné, par exemple un solvant chloré, a de préférence une densité comprise entre 1,3 et 1,7.

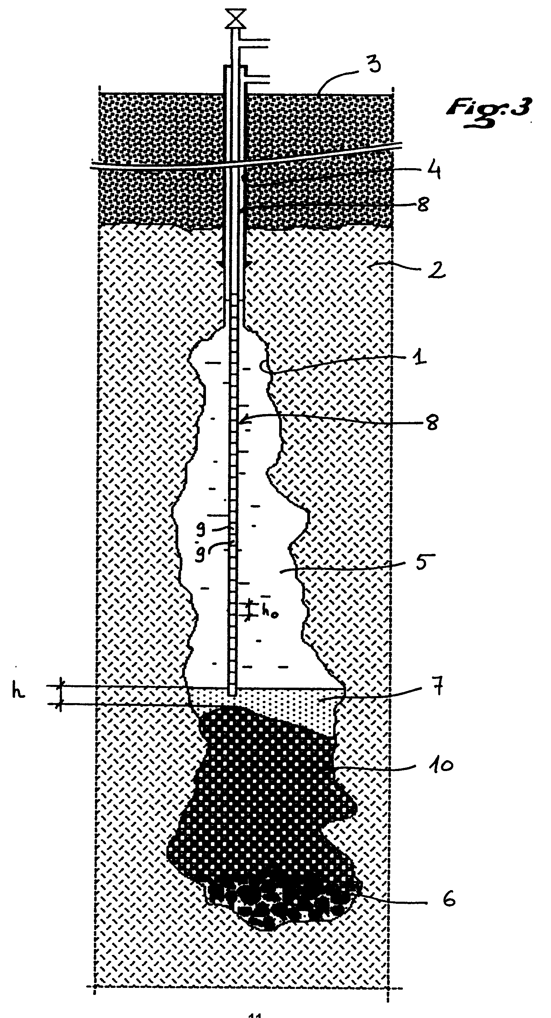

Sur la figure 3, le remplissage proprement dit a commencé.

Un mélange 10 composé de déchets solides se présentant ici sous la forme de granulés de quelques centimètres de diamètre typique et d'un liant hydraulique a été préparé et introduit dans la cavité au moyen du tube 8 dans la hauteur libre h du liquide tampon 7.

Selon l'invention, on s'est arrangé pour qu'on ait toujours h > ho. De cette façon, il est toujours possible de positionner l'extrémité du tube 8 dans ladite hauteur libre, entre la surface du liquide tampon 7 et le sommet du talus de mélange, en raccourcissant le tube 8 éléments 9 par éléments 9.

Le liant prend progressivement et finit par constituer avec les déchets un bloc solide qui peut s'opposer au fluage du sel, ce qui assure la tenue mécanique des parois de la cavité 1. De plus, grâce au liant, les déchets ne se comportent pas comme un fluide et la poussée géostatique du fond de la cavité n'est pas transmise au sommet de la cavité 1.

Grâce au procédé de l'invention, il n'y a jamais de contact direct entre la saumure et les déchets car le liquide tampon les sépare. Bien qu'elle soit déplacée-indirectement-par les déchets, la saumure 5 n'est donc jamais contaminée par eux, et on peut la récupérer pour la commercialiser. Cette absence de contact offre en outre l'avantage d'empêcher la contamination de l'environnement par les déchets.

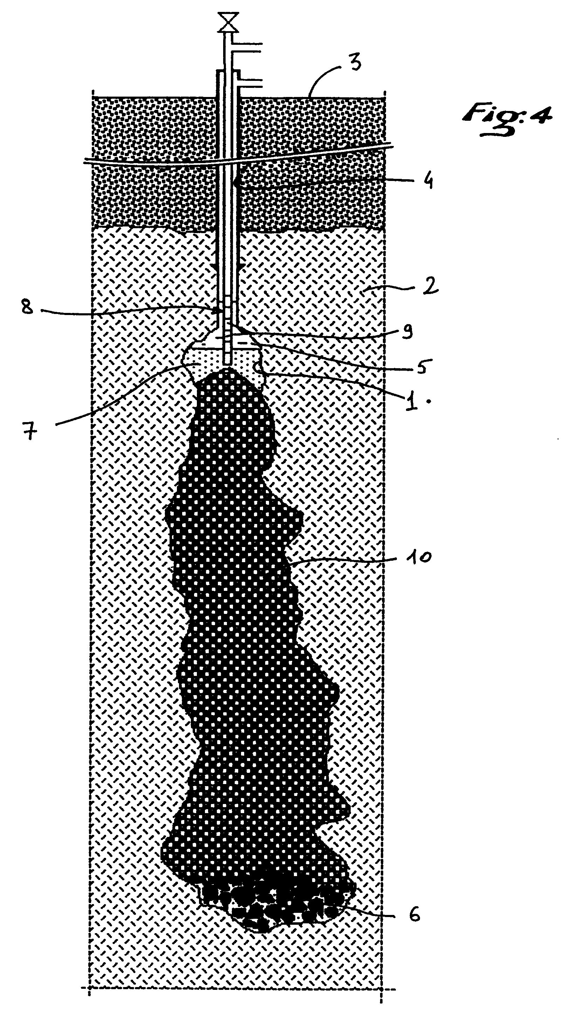

La figure 4 est similaire à la figure 3, mais le remplissage est terminé.

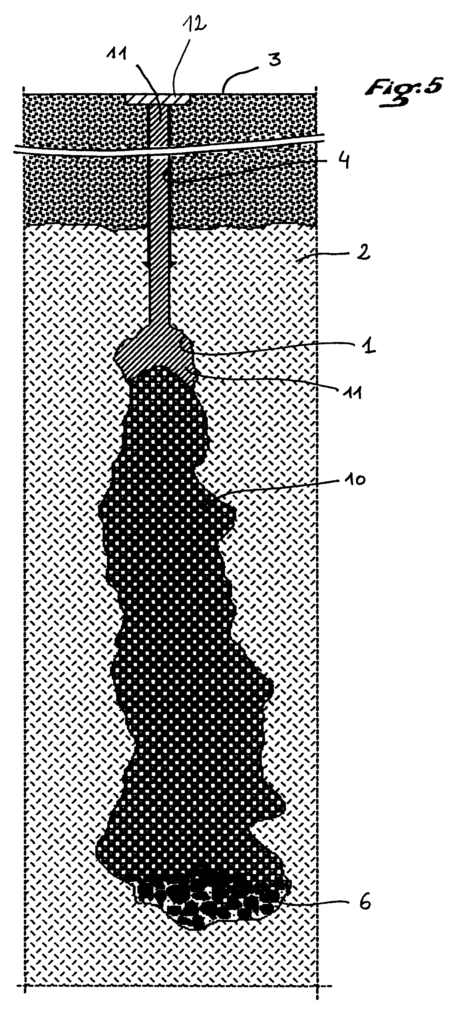

Sur la figure 5, une fois le remplissage terminé, on a bouché la cavité par injection d'un coulis de liant 11 par-dessus le mélange de déchets 10 sensiblement jusqu'au sommet du puits 4. Le coulis de liant 11 peut éventuellement être le même que celui utilisé pour lier les déchets. Une dalle de finition en béton 12 peut ensuite être coulée au niveau du sommet du puits.

Les critères de choix du liant et du liquide tampon sont également le prix et la densité.

Le liant peut être préparé à partir des cendres volantes d'usines d'incinération, par exemple d'ordures ménagères, mélangées à de la chaux provenant le cas échéant d'usines de fabrication de carbure de calcium ou de stations de traitement d'eaux résiduaires.

Les déchets peuvent subir au préalable une étape de conditionnement. Ainsi, ils peuvent être dispersés dans une matrice solide se présentant sous la forme d'une mousse à cellules fermées, chaque cellule contenant du déchet, ou être enrobés. Ceci peut s'avérer souhaitable par exemple dans les cas où les déchets contiennent des inhibiteurs de prise dudit liant.

Les déchets peuvent aussi partiellement entrer dans la composition du liant : c'est notamment le cas lorsqu'ils se présentent sous la forme d'une solution aqueuse pouvant servir d'eau de gâchage pour le liant.

## Revendications

### Revendications pour les Etats contractants suivants: IT, NL, ES

1. Procédé de confinement géologique de déchets industriels toxiques consistant à utiliser une cavité (1) préalablement lessivée dans un massif de sel gemme (2) et initialement remplie de saumure (5), à introduire dans ladite cavité (1) lesdits déchets au sein d'un mélange (10) pompable de densité supérieure à celle de ladite saumure (5), et capable de faire prise une fois mis en place, ladite saumure (5) étant évacuée en surface (3) au fur et à mesure que de la matière est introduite dans ladite cavité (1), caractérisé en ce que :
— dans un premier temps, une quantité prédéterminée d'un liquide tampon (7) non miscible à ladite saumure (5) et audit mélange (10), présentant une densité comprise entre la densité de ladite saumure (5) et celle dudit mélange (10) et comportant un ou plusieurs solvants halogénés, est introduite au fond de ladite cavité (1) grâce à un tube plongeur (8) disposé dans un puits (4) communiquant avec la surface (3) ; et en ce que
— dans un second temps, ledit mélange (10) est introduit à l'aide dudit tube plongeur (8) alors que l'extrémité inférieure dudit tube plongeur (8) est maintenue dans ledit liquide tampon (7) introduit tout d'abord.

2. Procédé selon la revendication 1, caractérisé en ce que ledit liquide tampon (7) admet une densité comprise entre 1,3 et 1,7

3. Procédé selon la revendication 1 ou la revendication 2, caractérisé en ce que lesdits déchets subissent, avant leur introduction dans ladite cavité, un conditionnement consistant :
— si lesdits déchets se présentent sous forme liquide, à les incorporer à une matrice solide,
— ou/et, lorsque les éléments toxiques sont contenus dans des solides, à fractionner lesdits solides en granulés dont le diamètre typique est de l'ordre du centimètre

4. Procédé selon l'une quelconque des revendications 1 à 3, caractérisé en ce que ledit mélange (10) est obtenu en amalgamant auxdits déchets au moins un liant hydraulique à prise lente.

5. Procédé selon la revendication 4, caractérisé en ce que ledit liant hydraulique contient de l'eau et de la chaux provenant toutes deux de résidus de l'industrie ainsi que des cendres volantes provenant d'usines d'incinération.

6. Procédé selon l'une quelconque des revendications 1 à 5, caractérisé en ce que ledit tube plongeur (8) est constitué d'éléments démontables (9) ayant chacun une longueur ho, ladite quantité prédéterminée dudit liquide tampon (7) étant calculée pour que la hauteur h de liquide tampon dans la cavité soit à tout moment supérieure à ladite longueur ho des éléments du tube, et l'extrémité inférieure du tube (8) étant maintenue, pendant l'introduction du mélange (10) au niveau du liquide tampon (7) grâce au démontage d'un élément (9) après l'autre.

7. Procédé selon l'une quelconque des revendications 1 à 6, caractérisé en ce qu'une fois la totalité de la cavité (1) remplie dudit mélange (10), tout le liquide tampon (7) est retiré du puits (4) et un liant hydraulique est finalement coulé dans ledit puits (4).

8. Procédé selon la revendication 7, caractérisé en ce que ledit mélange (10) est obtenu en amalgamant auxdits déchets au moins un liant hydraulique à prise lente et en ce que ledit liant hydraulique final admet la même composition que le liant servant à la fabrication dudit mélange (10).

**Revendications pour les Etats contractants suivants: FR, DE, GB**

1. Procédé de confinement géologique de déchets industriels toxiques consistant à utiliser une cavité (1) préalablement lessivée dans un massif de sel gemme (2) et initialement remplie de saumure (5), à introduire dans ladite cavité (1) lesdits déchets au sein d'un mélange (10) pompable de densité supérieure à celle de ladite saumure (5), et capable de faire prise une fois mis en place, ladite saumure (5) étant évacuée en surface (3) au fur et à mesure que de la matière est introduite dans ladite cavité (1), et selon lequel :

– dans un premier temps, une quantité prédéterminée d'un liquide tampon (7) non miscible à ladite saumure (5) et audit mélange (10), présentant une densité comprise entre la densité de ladite saumure (5) et celle dudit mélange (10) et comportant un ou plusieurs solvants halogénés, est introduite au fond de ladite cavité (1) grâce à un tube plongeur (8) constitué d'éléments (9) tubulaires démontables et disposé dans un puits (4) communiquant avec la surface (3) ;

– dans un second temps, ledit mélange (10) est introduit à l'aide dudit tube plongeur (8) alors que l'extrémité inférieure dudit tube plongeur (8) est maintenue dans ledit liquide tampon (7) introduit tout d'abord.

2. Procédé selon la revendication 1, caractérisé en ce que ledit liquide tampon (7) admet une densité comprise entre 1,3 et 1,7.

3. Procédé selon la revendication 1 ou la revendication 2, caractérisé en ce que lesdits déchets subissent, avant leur introduction dans ladite cavité, un conditionnement consistant :

– si lesdits déchets se présentent sous forme liquide, à les incorporer à une matrice solide,

– ou/et, lorsque les éléments toxiques sont contenus dans des solides, à fractionner lesdits solides en granulés dont le diamètre typique est de l'ordre du centimètre.

4. Procédé selon l'une quelconque des revendications 1 à 3, caractérisé en ce que ledit mélange (10) est obtenu en amalgamant auxdits déchets au moins un liant hydraulique à prise lente.

5. Procédé selon la revendication 4, caractérisé en ce que ledit liant hydraulique contient de l'eau et de la chaux provenant toutes deux de résidus de l'industrie ainsi que des cendres volantes.

6. Procédé selon l'une quelconque des revendications 1 à 5, caractérisé en ce que lesdits éléments (9) tubulaires démontables ont chacun une longueur ho, ladite quantité prédéterminée dudit liquide tampon (7) étant calculée pour que la hauteur h de liquide tampon dans la cavité soit à tout moment supérieur à ladite longueur ho des éléments du tube, et l'extrémité inférieure du tube (8) étant maintenue, pendant l'introduction du mélange (10) au sein du liquide tampon (7) grâce au démontage d'un élément (9) après l'autre.

7. Procédé selon l'une quelconque des revendications 1 à 6, caractérisé en ce qu'une fois la totalité de la cavité (1) remplie dudit mélange (10), tout le liquide tampon (7) est retiré du puits (4) et un liant hydraulique est finalement coule dans ledit puits (4).

8. Procédé selon la revendication 7, caractérisé en ce que ledit mélange (10) est obtenu en amalgamant auxdits déchets au moins un liant hydraulique à prise lente et en ce que ledit liant hydraulique final admet la même composition que le liant semant à la fabrication dudit mélange ( 10).

**Patentansprüche**

**Patentansprüche für folgenden Vertragsstaaten: IT, NL, ES**

1. Verfahren zur geologische Einschließung giftiger Industrieabfälle, das darin besteht, einen vorher in einem Massif aus Steinsalz (2) ausgelaugten und ursprünglich mit Sole (5) gefüllten Hohlraum (1) zu verwenden, in diesen Hohlraum (1) die Abfälle im Inneren einer pumpbaren Mischung (10) einzufüllen, deren Dichte größer als die des Sole (5) ist und die fähig ist, sich nach dem Einfüllen zu verfestigen, wobei die Sole (5) nach und nach an der Oberfläche (3) abgepumpt wird, je mehr Material in den Hohlraum (1) eingefüllt wird, dadurch gekennzeichnet, daß

– in einer ersten Phase eine vorbestimmte Menge einer Pufferflüssigkeit (7), die nicht mit der Sole (5) und der Mischung (10) mischbar ist, deren Dichte zwischen der der Sole (5) und der der Mischung (10) liegt und die ein oder mehr halogenierte Lösungsmittel aufweist, durch ein Tauchrohr (8) auf den Boden des Hohlraums (1) gebracht wird, das in einem mit der Oberfläche (3) in Kontakt stehenden Brunnen (4) angeordnet ist, und daß

– in einer zweiten Phase die Mischung (10) mit Hilfe dieses Tauchrohrs (8) eingefüllt wird, während das untere Ende des Tauchrohrs (8) in der zuerst eingefüllten Pufferflüssigkeit (7) gehalten wird.

2. Verfahren nach Anspruch 1, dadurch gekennzeichnet, daß diese Pufferflüssigkeit (7) eine Dichte zwischen 1,3 und 1,7 zuläßt.

3. Verfahren nach Anspruch 1 oder Anspruch 2, dadurch gekennzeichnet, daß die Abfälle vor ihrem Einfüllen in den Hohlraum einer Behandlung unterzogen werden, die darin besteht
– falls diese Abfälle in flüssiger Form vorliegen, sie in eine feste Matrize einzufügen,
– oder/und, wenn die giftigen Elemente in Festkörpern enthalten sind, diese Festkörper in Granulate zu zerkleinern, deren typischer Durchmesser etwa 1 cm beträgt.

4. Verfahren nach einem beliebigen der Ansprüche 1 bis 3, dadurch gekennzeichnet, daß die Mischung (10) dadurch erhalten wird, daß mit den Abfällen mindestens ein hydraulisches Bindemittel mit langsamer Verfestigung amalgamiert wird.

5. Verfahren nach Anspruch 4, dadurch gekennzeichnet, daß diese hydraulischer Bindemittel Wasser und Kalk, die beide aus Industrierückständen stammen, sowie Flugasche enthält, die aus Verbrennungsfabriken stammt.

Verfahren nach einem beliebigen der Ansprüche 1 bis 5, dadurch gekennzeichnet, daß dieses Tauchrohr (8) aus zerlegbaren rohrförmigen Elementen (9) besteht, die je eine Länge ho haben, wobei die vorbestimmte Menge der Pufferflüssigkeit (7) so berechnet ist, daß die Höhe h der Pufferflüssigkeit im Hohlraum zu jedem Zeitpunkt höher als diese Länge ho der Rohrelemente ist, und wobei das untere Ende des Rohrs (8) während des Einfüllens der Mischung (10) aufgrund des Entfernens eines Elementes (9) nach dem anderen in die Pufferflüssigkeit (7) eingetaucht bleibt.

7. Verfahren nach einem beliebigen der Ansprüche 1 bis 6, dadurch gekennzeichnet, daß, sobald die Gesamtheit des Hohlraums (1) mit der Mischung (10) gefüllt ist, die Ganze Pufferflüssigkeit (7) aus dem Brunnen (4) entfern wird und ein hydraulisches Bindemittel schließlich in diesen Brunnen (4) gegossen wird.

8. Verfahren nach Anspruch 7, dadurch gekennzeichnet, daß diese Mischung (10) dadurch enthalten wird, daß mit den Abfällen mindestens ein hydraulisches Bindemittel mit langsamer Verfestigung amalgamiert wird und daß dieses letzte Bindemittel die gleiche Zusammensetzung aufweist wie das Bindemittel, das zur Herstellung dieser Mischung (10) dient.

**Patentansprüche für folgenden Vertragsstaaten: FR, DE, GB**

1. Verfahren zur geologischen Einschließung giftiger Industrieabfälle, das darin besteht, einen vorher in einem Massiv aus Steinsalz (2) ausgelaugten und ursprünglisch mit Sole (5) gefüllten Hohlraum (1) zu verwenden, in diesen Hohlraum (1) diese Abfälle im Inneren einer pumpbaren Mischung (10) einzufüllen, deren Dichte größer als die der Sole (5) ist und die fähig ist, sich nach dem Einfüllen zu verfestigen, wobei die Sole (5) nach und nach an der Oberfläche (3) abgepumpt wird, je mehr Material in den Hohlraum (1) eingefüllt wird, und nach dem
– in einer ersten Phase eine vorbestimmte Menge einer Pufferflüssigkeit (7), die nicht mit der Sole (5) und der Mischung (10) mischbar ist, deren Dichte zwischen der der Sole (5) und der der Mischung (10) liegt und die ein oder mehr halogeniert Lösungsmittel aufweist, durch ein Tauchrohr (8) auf den Boden des Hohlraums (1) gebracht wird, das aus zerlegbaren Rohrelementen (9) besteht und in einem Brunnen (4) angeordnet ist, der mit der Oberfläche (3) in Kontakt steht,
– in einer zweiten Phase die Mischung (10) mit Hilfe dieses Tauchrohrs (8) eingefüllt wird, während das untere Ende des Tauchrohrs (8) in der zuerst eingefüllten Pufferflüssigkeit (7) gehalten wird.

2. Verfahren nach Anspruch 1, dadurch gekennzeichnet, daß diese Pufferflüssigkeit (7) eine Dichte zwischen 1,3 und 1,7 zuläßt.

3. Verfahren nach Anspruch 1 oder Anspruch 2, dadurch gekennzeichnet, daß die Abfälle vor ihrem Einfüllen in den Hohlraum einer Behendlung unterzogen werden, die darin besteht:
– falls diese Abfälle in flüssiger Form vorliegen, sie in eine feste Matrize einzufügen,
– oder/und, wenn die giftigen Elemente in Festkörpern enthalten sind, diese Festkörper in Granulate zu zerkleinern, deren typischer Durchmesser etwa 1 cm beträgt.

4. Verfahren nach einem beliebigen der Ansprüche 1 bis 3, dadurch gekennzeichnet, daß die Mischung (10) dadurch erhalten wird, daß mit den Abfällen mindestens ein Hydraulisches Bindemittel mit langsamer Verfestigung amalgamiert wird.

5. Verfahren nach Anspruch 4, dadurch gekennzeichnet, daß dieses hydraulischer Bindemittel Wasser und Kalk, die Binde aus Industrierückständen stammen, sowie Flugasche enthält.

6. Verfahren nach einem beliebigen der Ansprüche 1 bis 5, dadurch gekennzeichnet, daß die zerlegbaren rohrförmigen Elemente (9) je eine Länge ho haben, wobei die Vorbestimmte Menge der Pufferflüssigkeit (7) so berechnet ist, daß die Höhe h der Pufferflüssigkeit im Hohlraum zu jedem Zeitpunkt höher als diese Länge ho der Rohrelemente ist, und wobei das untere Ende des Rohrs (8) während des Einsfüllens der Mischung (10) aufgrund des Entfernens eines Elementes (9) nach dem anderen in die Pufferflüssigkeit (7) eingetaucht bleibt.

7. Verfahren nach einem beliebigen der Ansprüche 1 bis 6, dadurch gekennzeichnet, daß sobald die Gesamtheit des Hohlraums (1) mit der Mischung (10) gefüllt ist, die ganze Pufferflüssigkeit (7) aus dem Brunnen (4) entfernt wird und ein hydraulisches Bindemittel schließlich in diesen Brunnen (4) gegossen wird.

8. Verfahren nach Anspruch 7, dadurch gekennzeichnet, daß diese Mischung (10) dadurch erhalten wird, daß mit den Abfällen mindestens ein hydraulisches Bindemittel mit langsamer Verfestigung amalgamiert wird und daß dieses letzte Bindemittel die gleiche Zusammensetzung aufweist wie das Bindemittel, das zur Herstellung dieser Mischung (10) dient.

## Claims

**Claims for the following Contracting States IT, NL, ES**

1. A method for geological confinement of toxic industrial waste, consisting in using a cavity (1) which has previously been washed in a mass of rock-salt (2) and initially filled with brine (5), in introducing into said cavity (1) said waste in the core of a mixture (10) which is able to be pumped, of a density higher than that of said brine (5), and capable of setting once in place, said brine (5) being evacuated at the surface (3) as the material is introduced into said cavity (1), characterised in that:
   – firstly, a predetermined quantity of a buffer liquid (7), non-miscible with said brine (5) and with said mixture (10), presenting a density of between the density of said brine (5) and that of said mixture (10) and comprising one or more halogenated solvents, is introduced in the bottom of said cavity (1) by means of a plunger tube (8) arranged in a well (4) communicating with the surface (3); and in that
   – secondly, the said mixture (10) is introduced by means of said plunger tube (8) whilst the lower end of said plunger tube (8) is held in said buffer liquid (7) introduced first of all.

2. A method according to Claim 1, characterised in that said buffer liquid (7) permits a density of between 1.3 and 1.7.

3. A method according to Claim 1 or Claim 2, characterised in that said waste, before its introduction into said cavity, undergoes a conditioning, consisting,
   – if the said waste is in liquid form, in incorporating it into a solid matrix,
   – and/or, when the toxic elements are contained in solids, in breaking up said solids into granules, the typical diameter of which is in the order of one centimetre.

4. A method according to any one of Claims 1 to 3, characterised in that said mixture (10) is obtained by amalgamating with the said waste at least one slow-setting hydraulic binder.

5. A method according to Claim 4, characterised in that said hydraulic binder contains water and lime, both originating from industrial residues, and also fly ash originating from incineration works.

6. A method according to any one of Claims 1 to 5, characterised in that said plunger tube (8) is constituted by removable elements (9), each having a length ho, said predetermined quantity of said buffer liquid (7) being calculated so that the height h of buffer liquid in the cavity is at all times greater than said length ho of the elements of the tube, and the lower end of the tube (8) being held, during the introduction of the mixture (10) at the level of the buffer liquid (7) due to the dismantling of one element (9) after the other.

7. A method according to any one of Claims 1 to 6, characterised in that once the whole cavity (1) has been filled with said mixture (10), all the buffer liquid (7) is withdrawn from the well (4) and a hydraulic binder is finally poured into said well (4).

8. A method according to Claim 7, characterised in that said mixture (10) is obtained by amalgamating with said waste at least one slow-setting hydrauilc binder and in that said final hydraulic binder permits the same composition as the binder serving for the manufacture of said mixture (10).

**Claims for the following Contracting States: FR, DE, GB**

1. A method for geological confinement of toxic industrial waste, consisting in using a cavity (1) which has previously been washed in a mass of rock-salt (2) and initially filled with brine (5), in introducing into said cavity (1) said waste in the core of a mixture (10) which is able to be pumped, of a density higher than that of said brine (5), and capable of setting once in place, said brine (5) being evacuated at the surface (3) as the material is introduced into said cavity (1), and according to which:
   – firstly, a predetermined quantity of a buffer liquid (7), non-miscible with said brine (5) and with said mixture (10), presenting a density of between the density of said brine (5) and that of said mixture (10) and comprising one or more halogenated solvents, is introduced in the bottom of said cavity (1) by means of a plunger tube (8) constituted by removable tubular elements (9) and arranged in a well (4) communicating with the surface (3);
   – secondly, the said mixture (10) is introduced by means of said plunger tube (8) whilst the lower end of said plunger tube (8) is held in said buffer liquid (7) introduced first of all.

2. A method according to Claim 1, characterised in that said buffer liquid (7) permits a density of between 1.3 and 1.7.

3. A method according to Claim 1 or Claim 2, characterised in that said waste, before its introduction into said cavity, undergoes a conditioning, consisting,

– if the said waste is in liquid form, in incorporating it into a solid matrix,

– and/or, when the toxic elements are contained in solids, in breaking up said solids into granules, the typical diameter of which is in the order of one centimetre.

4. A method according to any one of Claims 1 to 3, characterised in that said mixture (10) is obtained by amalgamating with the said waste at least one slow-setting hydraulic binder.

5. A method according to Claim 4, characterised in that said hydraulic binder contains water and lime, both originating from industrial residues, and also fly ash.

6. A method according to any one of Claims 1 to 5, characterised in that said removable tubular elements (9) each have a length ho, said predetermined quantity of said buffer liquid (7) being calculated so that the height h of buffer liquid in the cavity is at all times greater than said length ho of the elements of the tube, and the lower end of the tube (8) being held, during the introduction of the mixture (10) at the core of the buffer liquid (7) due to the dismantling of one element (9) after the other.

7. A method according to any one of Claims 1 to 6, characterised in that once the whole cavity (1) has been filled with said mixture (10), all the buffer liquid (7) is withdrawn from the well (4) and a hydraulic binder is finally poured into said well (4).

8. A method according to Claim 7, characterised in that said mixture (10) is obtained by amalgamating with said waste at least one slow-setting hydraulic binder and in that said final hydraulic binder permits the same composition as the binder serving for the manufacture of said mixture (10).

*Fig:1*

*Fig. 2*

Fig:3

*Fig:4*

*Fig.5*